# EUROPEAN PATENT APPLICATION

(11) **EP 2 752 810 A1**
(43) Date of publication of application: **09.07.2014**
(21) Application number: 12832507.3
(22) Date of filing: 13.08.2012
(51) Int. Cl.: G06Q 50/06, B60L 3/08, B60L 11/18, G06Q 30/02, G06Q 50/10

(54) **CHARGING STAND MANAGEMENT SYSTEM, CONTROL METHOD, AND PROGRAM**

(30) Priority: 16.09.2011 JP 2011203018
(71) Applicant: Mitsubishi Heavy Industries, Ltd., Tokyo 108-8215 (JP)
(72) Inventor: SHIBATA Yutaka, Tokyo 108-8215 (JP); MURATA Tomohiro, Tokyo 108-8215 (JP)
(74) Representative: Henkel, Breuer & Partner
(86) International application number: PCT/JP2012/070634
(87) International publication number: WO 2013/038858

(57) **Abstract**

The present invention is provided with a charger designation unit (115) that in a case where the allowable power that can be used by a charging stand (S) changes, designates from among chargers (C) that have not been determined for use at a prescribed time, a charger (C) that may be used at the prescribed time, where such designation is conducted on the basis of the total sum of the allowable power at the prescribed time and the output of the charger (C) that has been determined for use at the prescribed time, and the output of the chargers (C) that have not been determined for use at the prescribed time; and charger notification units (116, 132) that notify a consumer of the charger (C) designated by the charger designation unit (115) as the charger (C) that may be used at the prescribed time and the output of that charger (C).

## Description

### Technical Field

The present invention relates to a charging stand management system, a control method, and a program. Particularly, the present invention relates to a charging stand management system that manages a charging stand provided with one or more chargers, a control method of controlling the charging stand management system, and a program for the charging stand management system.

Priority is claimed on Japanese Patent Application No. 2011-203018, filed September 16, 2011, the content of which is incorporated herein by reference.

### Background Art

An electric vehicle is primarily charged in a garage. However, the distance an electric vehicle can travel on one charge is limited. Therefore, in the future when electric vehicles are widely spread out in the community, charging stands are necessary on the go. In order to shorten the charging time of an electric vehicle, it is necessary to provide a charging stand with chargers having high output power. In this case, the charging stand should inevitably secure a large contract power. If the output power of a charger with high output power cannot be coped with, there may be a possibility in the charging stand that a breaker will be turned on to cut off a supply of power while charging an electric vehicle.

As a technique capable of solving such a problem, a method of supporting a supply of power in a power stand that supplies power to an electric vehicle is known (for example, see PTL 1). In this method, the position of a power stand is acquired from a power stand information database in which at least the position information of power stands which are equipment for charging an electric vehicle is stored. Then, in this method, a weather prediction at the position is acquired from a weather prediction database in which the information regarding the weather prediction of predetermined regions is stored. Subsequently, in this method, a traffic volume prediction at the position is acquired from a traffic volume prediction database in which the information obtained by predicting traffic volumes of predetermined sections of highways or predetermined sections of general roads is stored. Then, in this method, necessary electric energy of a power stand installed at the position is calculated using the acquired weather prediction and the acquired traffic volume prediction with reference to a power demand prediction database in which power demand predictions are classified and stored depending on the weather conditions, the traffic volumes, and the daily attributes. Then, in this method, the electric energy to be purchased from an electric power market is determined on the basis of the calculated electric energy.

### Citation List

### Patent Literature

[PTL 1] Japanese Unexamined Patent Application, First Publication No. 2007-206889

### Summary of Invention

### Problem to be Solved by the Invention

Recently, at a time point or in a time zone in which there is insufficient power, voluntary power use reduction may be requested or the supply of power to a predetermined region may be forcibly cut off. Under such situations, charging stands cannot continue to consume large amounts of power to the same extent as under regular circumstances and it is necessary to plan for situations in which there is less power consumption than during regular circumstances or the like.

However, in the technique described in PTL 1, the amount of power demand in a charging stand is calculated on the basis of the weather prediction or the traffic volume prediction and power corresponding to the calculated amount of power demand is purchased. Thus, a countermeasure for a case in which power consumption is limited due to insufficient power compared with regular circumstances is not disclosed at all.

### Means for Solving the Problem

In order to solve the above-mentioned problem, according to an aspect of the present invention, there is provided a charging stand management system that manages a charging stand provided with one or more chargers, including: a charger specifying unit that, where allowable power capable of being utilized in the charging stand varies, specifies the charger which can be utilized at a predetermined time from among the chargers which are not determined to be utilized at the predetermined time, the charger being specified on the basis of the allowable power at the predetermined time, the total sum of output power of the chargers determined to be utilized at the predetermined time, and the output power of the chargers which are not determined to be utilized at the predetermined time; and a charger guidance unit that guides a consumer on the charger which is specified by the charger specifying unit to be utilized at the predetermined time, and the output power of the specified charger.

The charging stand management system according to the present invention may further include an allowable power setting unit that sets the allowable power of a charging stand disposed in a predetermined region on the basis of power supply-demand prediction in the predetermined region, and the charger specifying unit may specify the charger which can be utilized at a predetermined time from the chargers which are not determined to be utilized at the predetermined time on the basis of the allowable power set by the allowable power setting unit, the total sum of output power of the chargers determined to be utilized at the predetermined time, and the output power of the chargers which are not determined to be utilized at the predetermined time.

The charging stand management system according to the present invention may further include a utilization fee setting unit that sets a utilization fee of a charger, and the charger guidance unit may guide a consumer on the utilization fee of the charger set by the utilization fee setting unit along with the charger, which can be utilized at the predetermined time and specified by the charger specifying unit, and the output power thereof.

According to another aspect of the present invention, there is provided a control method of controlling a charging stand management system that manages a charging stand provided with one or more chargers, including: a charger specifying step of specifying the charger which is utilized at a predetermined time from the chargers which are not determined to be utilized at the predetermined time on the basis of allowable power at the predetermined time, the total sum of output power of the chargers determined to be utilized at the predetermined time, and the output power of the chargers which are not determined to be utilized at the predetermined time where the allowable power capable of being utilized in the charging stand varies; and a charger guidance step of guiding a consumer on the charger, which is utilized at the predetermined time and specified in the charger specifying step, and the output power thereof.

According to still another aspect of the present invention, there is provided a program for a charging stand management system that manages a charging stand provided with one or more chargers, making the charging stand management system serve as: a charger specifying unit that specifies the charger which is utilized at a predetermined time from the chargers which are not determined to be utilized at the predetermined time on the basis of allowable power at the predetermined time, the total sum of output power of the chargers determined to be utilized at the predetermined time, and the output power of the chargers which are not determined to be utilized at the predetermined time where the allowable power capable of being utilized in the charging stand varies; and a charger guidance unit that guides a consumer on the charger, which is utilized at the predetermined time and specified by the charger specifying unit, and the output power thereof.

The summary of the present invention above does not describe all the necessary features of the present invention and the sub combinations of the feature groups can also construct the present invention.

### Effects of the Invention

As can be clearly seen from the above description, the present invention is particularly useful for situations with insufficient power in which power consumption is more limited compared with regular circumstances.

### Brief Description of Drawings

FIG. 1 is a diagram illustrating an example of a utilization environment of a charging stand management system 100 according to an embodiment.
FIG. 2 is a diagram illustrating an example of a configuration of a charging stand Sa.
FIG. 3 is a diagram illustrating an example of a block configuration of a system managing device 110.
FIG. 4 is a diagram illustrating an example of information stored in a charging stand information storage unit 123 in the form of a table.
FIG. 5 is a diagram illustrating an example of information stored in a member information storage unit 124 in the form of a table.
FIG. 6 is a diagram illustrating an example of information stored in a utilization fee information storage unit 125 in the form of a table.
FIG. 7 is a diagram illustrating an example of information stored in an allowable power information storage unit 126 in the form of a table.
FIG. 8 is a diagram illustrating an example of information stored in a reservation information storage unit 127 in the form of a table.
FIG. 9 is a diagram illustrating an example of a block configuration of a charging stand managing device 130a.
FIG. 10 is a diagram illustrating an example of a display screen 200 used to guide a consumer.
FIG. 11 is a diagram illustrating an example of a display screen 300 used to guide a consumer.
FIG. 12 is a diagram illustrating an example of an operation flow in the system managing device 110.
FIG. 13 is a diagram illustrating another example of the operation flow in the system managing device 110.
FIG. 14 is a diagram illustrating an example of an operation sequence in the system managing device 110 and the charging stand managing device 130.
FIG. 15 is a diagram illustrating still another example of the operation flow in the system managing device 110.
FIG. 16 is a diagram illustrating another example of the operation sequence in the system managing device 110 and the charging stand managing device 130.
FIG. 17 is a diagram illustrating still another example of the operation sequence in the system managing device 110 and the charging stand managing device 130.
FIG. 18 is a diagram illustrating an example of a hardware configuration when the system managing device 110 and the charging stand managing device 130 are embodied by an electronic information processing device such as a computer.

### Description of Embodiments

Hereinafter, the present invention will be described through the use of embodiments of the present invention. However, the following embodiments do not limit the invention described in the appended claims, and all combinations of features described in the embodiments should not be limited as essential to the means for resolution of the present invention.

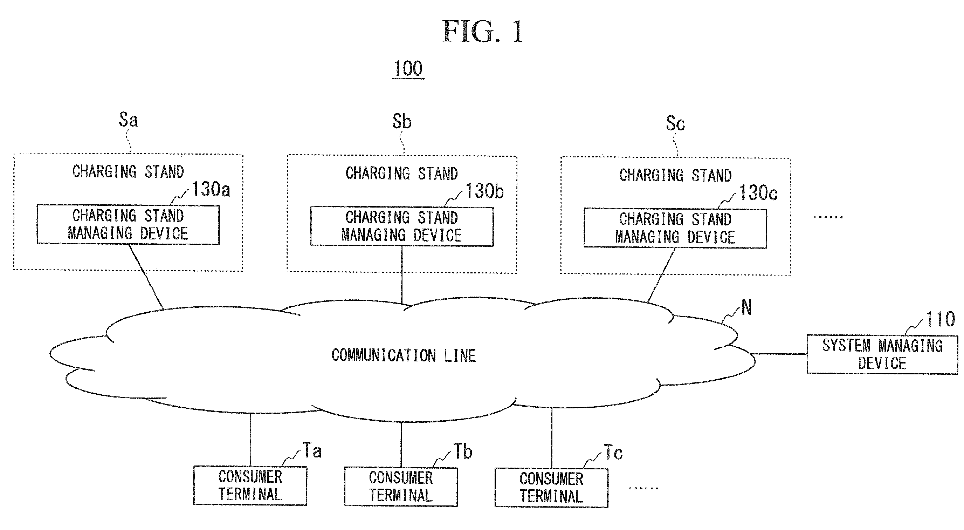

FIG. 1 illustrates an example of a utilization environment of a charging stand management system 100 according to an embodiment. The charging stand management system 100 is a system that manages a plurality of charging stands Sa, Sb, Sc, ... (hereinafter, generically referred to a charging stand S) provided with one or more chargers. The charging stand management system 100 is assumed as a business model in which a consumer registered as a member can utilize the charging stand S. An IC (Integrated Circuit) card on which information used to authenticate a member is recorded is given to the consumer registered as a member.

The charging stand management system 100 includes a system managing device 110 and a plurality of charging stand managing devices 130a, 130b, 130c, ... (hereinafter, generically referred to as a charging stand managing device 130).

The system managing device 110 manages information on the charging stand management system 100. More specifically, the system managing device 110 is run by a provider providing the charging stand management system 100. The system managing device 110 is connected to the respective charging stand managing devices 130 and a plurality of consumer terminals Ta, Tb, Tc, ... (hereinafter, generically referred to as a consumer terminal T) via a communication line N so as to communicate therewith. Here, the consumer terminal T is a terminal of a consumer utilizing the charging stand S. Examples of the consumer terminal T include portable information terminals such as a mobile phone and a PDA (Personal Digital Assistants) and a PC.

The charging stand managing devices 130 manage information on the corresponding charging stands S. More specifically, the charging stand managing devices 130 are provided to the charging stands S, respectively. The charging stand managing devices 130 are connected to the system managing device 110 via the communication line N so as to communicate therewith. Here, the communication line N includes a computer network such as the Internet, a core network of a communication service provider, and various local networks.

In this embodiment, a configuration in which the charging stand management system 100 includes a single system managing device 110 will be described for the purpose of convenience of explanation. However, the charging stand management system 100 may include a plurality of system managing devices 110.

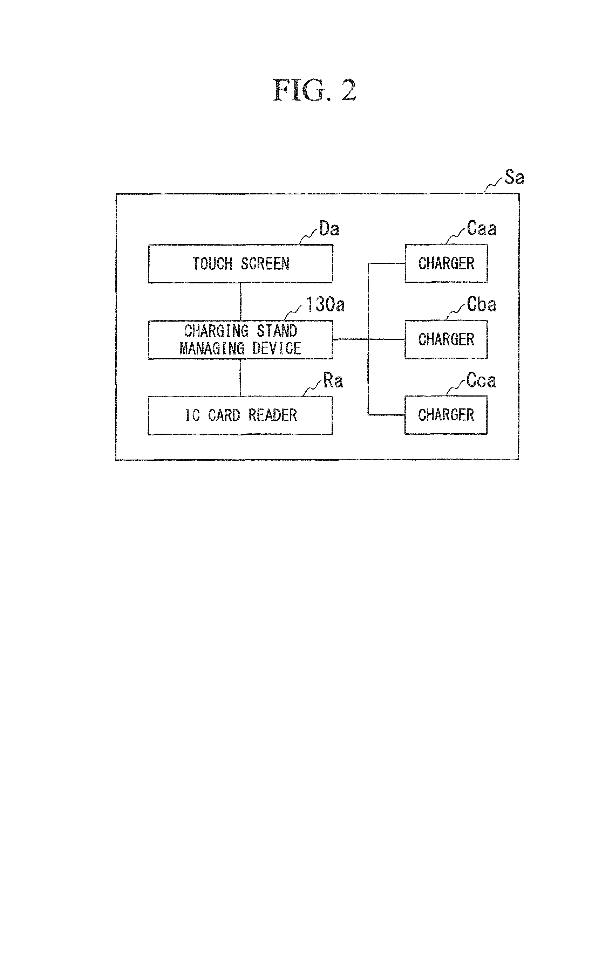

FIG. 2 illustrates an example of a configuration of a charging stand Sa. The charging stand S is provided with a charging stand managing device 130a, a touch screen Da, an IC card reader Ra, and a plurality of chargers Caa, Cba, Cca, ... (hereinafter, generically referred to as a charger C). Functions and operations of the elements will be described below.

The charging stands Sb, Sc, ... not including the charging stand Sa are provided with the same elements as provided to the charging stand Sa. In the following description, in order to distinguish between an element provided with a charging stand from an element provided with a separate charging stand, the same subscript (a, b, c, ...) as the charging stand S including the corresponding element is added to a reference sign of the element for distinction. For example, the touch screen Da, the touch screen Db, and the touch screen Dc represent that the touch screens are elements of the charging stand Sa, the charging stand Sb, and the charging stand Sc, respectively.

In the following description, the function and the operation of an element having no subscript added thereto represent the functions and the operations of all the elements having the same reference signs. For example, the function and the operation described for the touch screen D represent the functions and the operations of the touch screen Da, the touch screen Db, the touch screen Dc, ....

The touch screen D is a display which can input information to a computer by touching a screen with a finger or a dedicated pen. More specifically, the touch screen D is electrically connected to the charging stand managing device 130. The touch screen D displays information indicated by data output from the charging stand managing device 130 on the screen thereof. When the screen is touched with a finger or a dedicated pen, the touch screen D outputs data indicating the touch position to the charging stand managing device 130.

The IC card reader R reads data recorded on an IC card. More specifically, the IC card reader R is electrically connected to the charging stand managing device 130. When reading the data recorded on the IC card, the IC card reader R outputs the read data to the charging stand managing device 130.

The chargers C charge electric vehicles. More specifically, each charger C may have a different magnitude of output power or may have a plurality of magnitudes of output power. In this embodiment, it is assumed that each charger C has three steps of output power of 50 (kW), 30 (kW), and 20 (kW). The chargers C are electrically connected to the charging stand managing device 130. The chargers C are controlled by the charging stand managing device 130 and operate to output the power instructed from the charging stand managing device 130.

In this embodiment, for the purpose of convenience of explanation, a configuration in which a charging stand S is provided with a single charging stand managing device 130, a single electronic display board B, and a single IC card reader R will be described. However, a charging stand S may be provided with a plurality of charging stand managing devices 130, a plurality of electronic display boards B, and a plurality of IC card readers R.

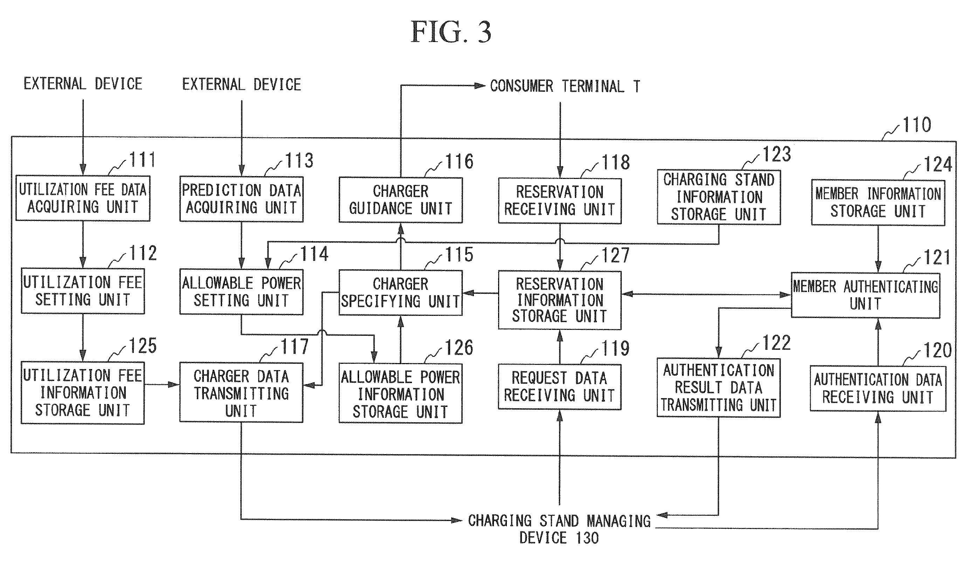

FIG. 3 illustrates an example of the block configuration of the system managing device 110. The system managing device 110 includes a utilization fee data acquiring unit 111, a utilization fee setting unit 112, a prediction data acquiring unit 113, an allowable power setting unit 114, a charger specifying unit 115, a charger guidance unit 116, a guidance data transmitting unit 117, a reservation receiving unit 118, a request data receiving unit 119, an authentication data receiving unit 120, a member authenticating unit 121, an authentication result data transmitting unit 122, a charging stand information storage unit 123, a member information storage unit 124, a utilization fee information storage unit 125, an allowable power information storage unit 126, and a reservation information storage unit 127. The functions and the operations of the constituent units will be described below.

The utilization fee data acquiring unit 111 acquires data indicating the utilization fee of the chargers C.

The utilization fee setting unit 112 sets the utilization fee of the chargers C.

The prediction data acquiring unit 113 acquires data indicating predicted supply and demand of power in a predetermined region.

The allowable power setting unit 114 sets the allowable power of the charging stand S disposed in the predetermined region on the basis of the predicted supply and demand of power in the predetermined region.

When the allowable power capable of being utilized in the charging stand S varies, the charger specifying unit 115 specifies a charger C which can be utilized at a predetermined time from the chargers C which are not determined to be utilized at the predetermined time on the basis of the allowable power at the predetermined time, the total sum of output power of the chargers C determined to be utilized at the predetermined time, and the output power of the chargers C which are not determined to be utilized at the predetermined time. More specifically, the charger specifying unit 115 specifies a charger C capable of being used at the predetermined time from the chargers C which are not determined to be utilized at the predetermined time on the basis of the allowable power set by the allowable power setting unit 114, the total sum of the output power of the chargers C determined to be utilized at the predetermined time, and the output power of the chargers C which are not determined to be utilized at the predetermined time.

The charger guidance unit 116 guides a consumer on the charger C, which is specified by the charger specifying unit 115, as the charger C capable of being utilized at the predetermined time and the output power thereof.

The charger data transmitting unit 117 transmits data indicating the charger C, which is specified by the charger specifying unit 115, as the charger C capable of being utilized at the predetermined time and the output power thereof to the charging stand managing device 130.

The reservation receiving unit 118 receives a reservation of the charger C from a consumer terminal T.

The request data receiving unit 119 receives data indicating details of the utilization request of the chargers C from the charging stand managing device 130.

The authentication data receiving unit 120 receives data used to authenticate a consumer from the charging stand managing device 130.

The member authenticating unit 121 authenticates whether the consumer is registered as a member.

The authentication result data transmitting unit 122 transmits data indicating the charger C to be utilized by the authenticated consumer and the output power thereof to the charging stand managing device 130.

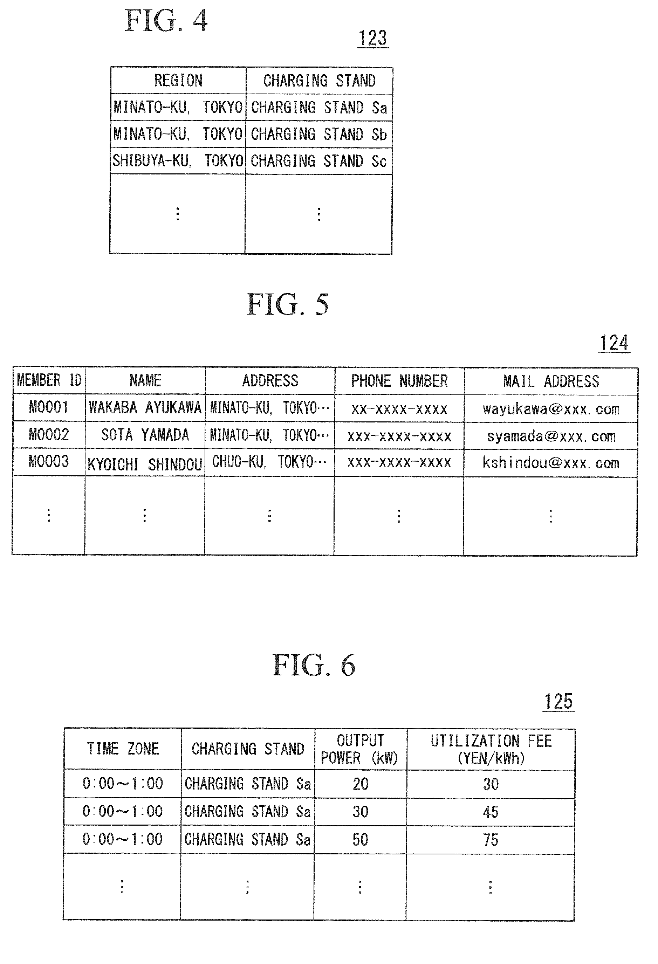

FIG. 4 illustrates an example of information stored in the charging stand information storage unit 123 in the form of a table. The charging stand information storage unit 123 stores various pieces of correlated information such as region and charging stand.

The region is information indicating defined sections of a land. The charging stand is information indicating the charging stand S disposed in the section indicated by the information of "region".

FIG. 5 illustrates an example of information stored in the member information storage unit 124 in the form of a table. The member information storage unit 124 stores various pieces of correlated information such as member ID (Identifier), name, address, phone number, and mail address.

The member ID is information indicating an identification number for uniquely identifying a consumer from consumers registered as members of the charging stand management system 100. The name is information indicating the name of the consumer indicated by the information of "member ID". The address is information indicating a place in which the consumer indicated by the information of "member ID" lives. The phone number is a number added to give a call to a stationary phone or a mobile phone of the consumer indicated by the information of "member ID". The mail address is an address used to send an electronic mail to the consumer indicated by the information of "member ID" using the Internet.

FIG. 6 illustrates an example of information stored in the utilization fee information storage unit 125 in the form of a table. The utilization fee information storage unit 125 stores various pieces of correlated information such as time zone, charging stand, output power (kW), and utilization fee (yen/kWh).

The time zone is information indicating a constant period of time between a specified time and another specified time in a day. The charging stand is information indicating a charging stand. The output power (kW) is information indicating a value of the output power of a charger C. The utilization fee (yen/kWh) is information indicating a fee of power per I (kWh) when the charger C having the output power indicated by the information of "output power (kW)" is used in the charging stand indicated by the information of "charging stand" in the time zone indicated by the information of "time zone".

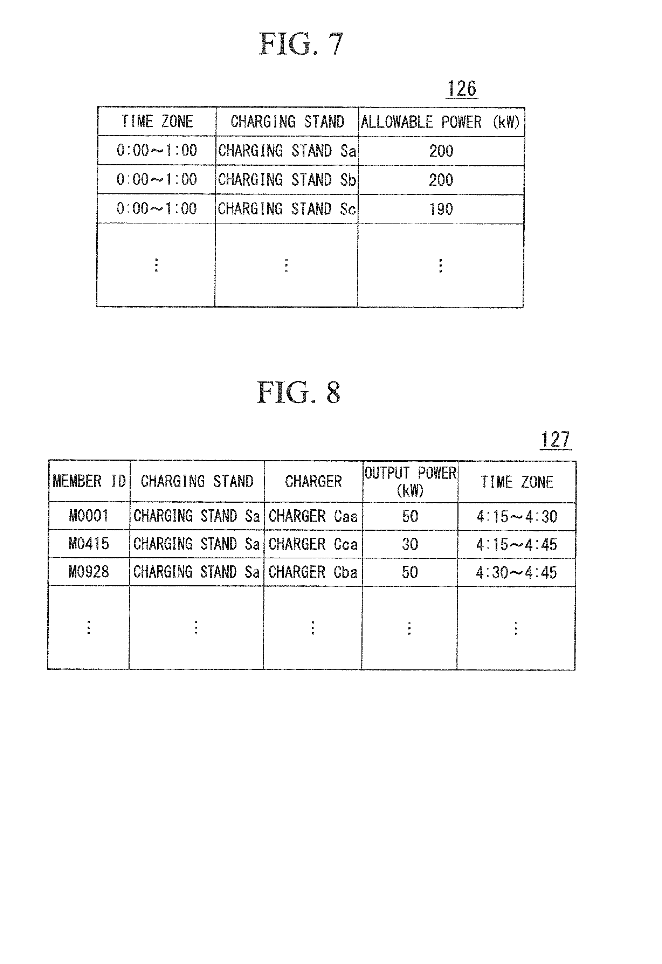

FIG. 7 illustrates an example of information stored in the allowable power information storage unit 126 in the form of a table. The allowable power information storage unit 126 stores various pieces of correlated information such as time zone, charging stand, and allowable power (kW).

The time zone is information indicating a constant period of time between a specified time and another specified time in a day. The charging stand is information indicating a charging stand. The allowable power (kW) is information indicating an amount of power which can be used in the charging stand indicated by the information of "charging stand" in the time zone indicated by the information of "time zone".

FIG. 8 illustrates an example of information stored in the reservation information storage unit 127 in the form of a table. The reservation information storage unit 127 stores various pieces of information such as member ID, charging stand, charger, output power (kW), and time zone.

The member ID is information indicating an identification number used to identify a consumer from consumers registered as members of the charging stand management system 100. The charging stand is information indicating a charging stand provided with a charger C for which the consumer indicated by the piece of information "member ID" has reserved a utilization or has requested a utilization without reservation. The charger is information indicating a charger C for which the consumer indicated by the piece of information "member ID" has reserved a utilization or has requested a utilization without reservation. The output power (kW) is information indicating the output power of the charger C for which the consumer indicated by the piece of information "member ID" has reserved a utilization or has requested a utilization without reservation. The time zone is information indicating a time zone in which the charger C for which the consumer indicated by the piece of information "member ID" has reserved a utilization or has requested a utilization without reservation will be utilized.

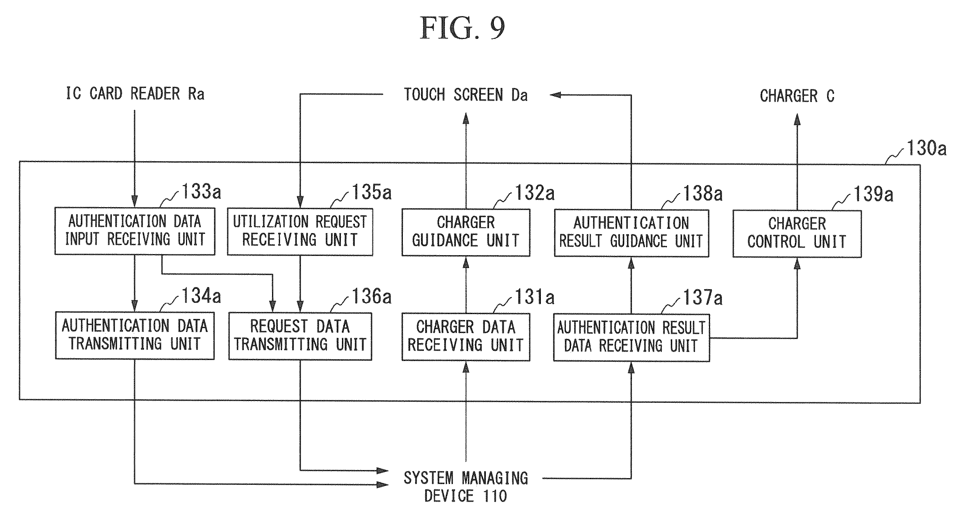

FIG. 9 illustrates an example of a block configuration of a charging stand managing device 130a. The charging stand managing device 130a includes a charger data receiving unit 131a, a charger guidance unit 132a, an authentication data input receiving unit 133a, an authentication data transmitting unit 134a, a utilization request receiving unit 135a, a request data transmitting unit 136a, an authentication result data receiving unit 137a, an authentication result guidance unit 138a, and a charger control unit 139a. The functions and the operations of the constituent units will be described below.

The charging stand managing devices 130b, 130c, ... other than the charging stand managing device 130a are provided with the same elements as provided to the charging stand managing device 130a. In the following description, in order to distinguish between an element provided with a charging stand from an element provided with a separate charging stand, the same subscript (a, b, c, ... ) as the charging stand managing device 130 including the corresponding element is added to a reference sign for distinction. For example, the charger data receiving unit 131a, the charger data receiving unit 131 b, and the charger data receiving unit 131c are elements of the charging stand managing device 130a, the charging stand managing device 130b, and the charging stand managing device 130c, respectively.

In the following description, the function and the operation of an element having no subscript added thereto represent the functions and the operations of all the elements having the same reference sign. For example, the function and the operation described for the charger data receiving unit 131 represent the functions and the operations of the charger data receiving unit 131a, the charger data receiving unit 131 b, the charger data receiving unit 131c, ....

The charger data receiving unit 131 receives data indicating a charger C, which can be utilized at a predetermined time and which is a charger C specified by the charger specifying unit 115, and the output power thereof from the system managing device 110.

The charger guidance unit 132 guides a consumer on the charger C which can be utilized at a predetermined time and the output power thereof.

The authentication data input receiving unit 133 receives an input of data used to authenticate a consumer as a member from the IC card reader R.

The authentication data transmitting unit 134 transmits data used to authenticate a consumer as a member to the system managing device 110.

The utilization request receiving unit 135 receives a utilization request without reservation of a charger C through the use of the touch screen D.

The request data transmitting unit 136 transmits data indicating details of a utilization request for a charger C to the system managing device 110.

The authentication result data receiving unit 137 receives the data indicating a charger C which should be utilized by the authenticated consumer and the output power thereof from the system managing device 110.

The authentication result guidance unit 138 guides the authenticated consumer on the charger C which should be utilized by the authenticated consumer.

The charger control unit 139 controls the charger C, which will be utilized by the authenticated consumer, so as to be utilized with the output power selected by the authenticated consumer.

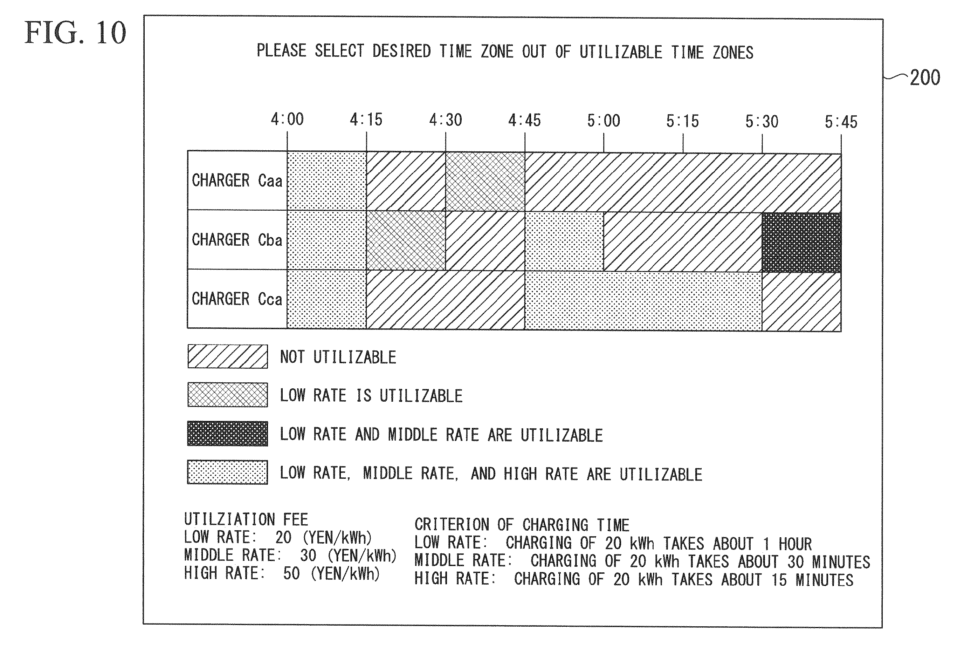

FIG. 10 illustrates an example of a display screen 200 used to guide a consumer. The display screen 200 guides a consumer on the charger C which can be utilized at a predetermined time and the output power thereof.

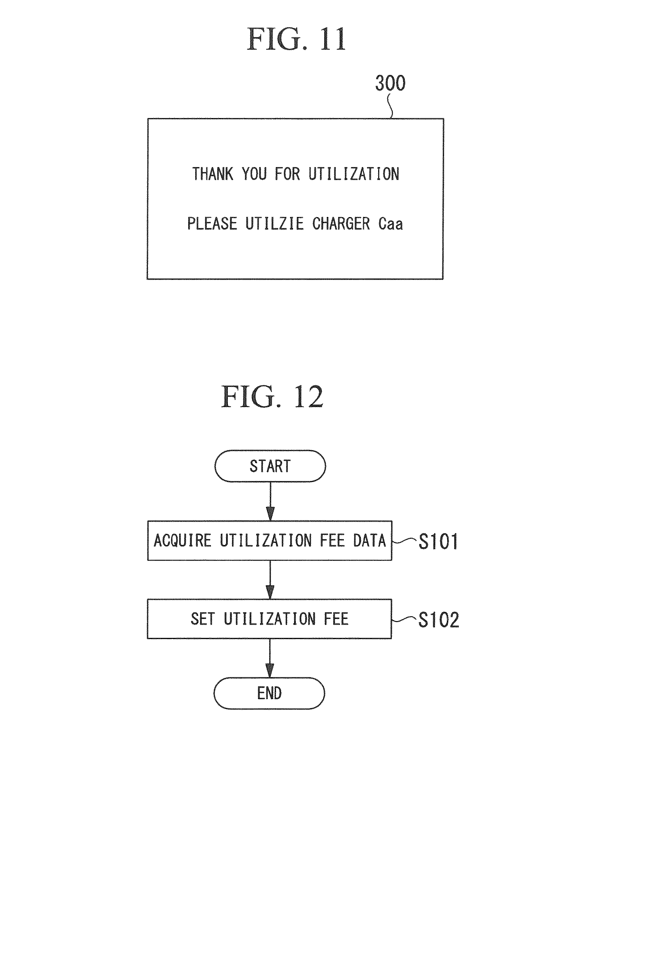

FIG. 11 illustrates an example of a display screen 300 used to guide a consumer. The display screen 300 guides an authenticated consumer on the charger C which will be utilized by the authenticated consumer.

FIG. 12 illustrates an example of an operation flow of the system managing device 110. This operation flow represents an operation flow of setting a utilization fee of a charger C. This operation flow will be described with reference to FIGS. 1 to 11.

The provider of the charging stand management system 100 or the provider of the charging stand S sets a utilization fee of chargers C in running the charging stand management system 100. For example, the provider of the charging stand management system 100 inputs data indicating a utilization fee of chargers C to the system managing device 110 through the use of the input device of the charging stand managing device 130. For example, the provider of the charging stand S transmits data indicating a utilization fee of chargers C to the system managing device 110 through the use of a computer such as a PC.

When the above-mentioned operation is carried out by the provider of the charging stand management system 100 or the provider of the charging stand S, the utilization fee data acquiring unit 111 of the system managing device 110 acquires the data indicating the utilization fee of chargers C (S101). Then, the utilization fee data acquiring unit 111 sends the acquired data to the utilization fee setting unit 112.

When the data sent from the utilization fee data acquiring unit 111 is received, the utilization fee setting unit 112 of the system managing device 110 sets the utilization fee of the chargers C (S102). More specifically, the utilization fee setting unit 112 stores information of the utilization fee of the chargers C indicated by the data received from the utilization fee data acquiring unit 111 in the utilization fee information storage unit 125. In this way, the information illustrated in FIG 6 is stored in the utilization fee information storage unit 125 of the system managing device 110.

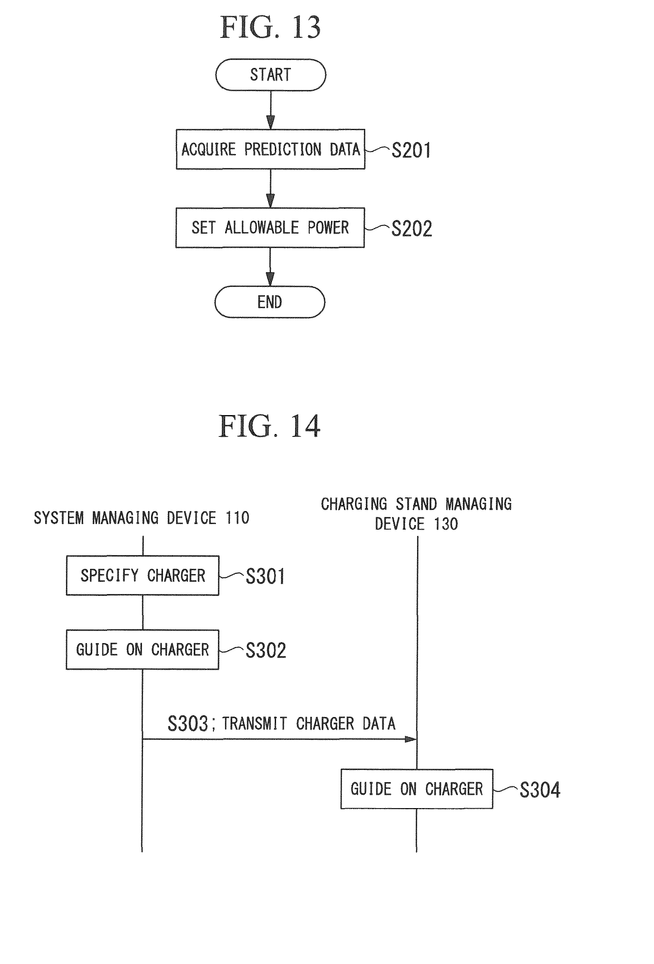

FIG. 13 illustrates another example of the operation flow of the system managing device 110. This operation flow represents an operation flow of setting allowable power of a charging stand S. This operation flow will be described with reference to FIGS. 1 to 12.

The prediction data acquiring unit 113 of the system managing device 110 acquires data indicating predicted power supply and demand in a predetermined region in setting the allowable power of the charging stand S (S201). For example, the prediction data acquiring unit 113 acquires data indicating predicted power supply and demand in a predetermined region from an external server which publishes the data over the Internet. Then, the prediction data acquiring unit 113 sends the acquired data to the allowable power setting unit 114.

When the data sent from the prediction data acquiring unit 113 is received, the allowable power setting unit 114 of the system managing device 110 sets the allowable power of the charging stand S disposed in the predetermined region on the basis of the predicted power supply and demand in the predetermined region (S202). For example, when there is a tendency of excessive demand of power in a predetermined region, the allowable power setting unit 114 sets the allowable power of the charging stand S disposed in the region so as to be low. For example, when there is a tendency of excessive supply of power in a predetermined region, the allowable power setting unit 114 sets the allowable power of the charging stand S disposed in the region so as to be high. Here, the charging stand information storage unit 123 of the system managing device 110 stores the information illustrated in FIG. 4. The allowable power setting unit 114 specifies a charging stand S in a target region of the power supply and demand prediction indicated by the data received from the prediction data acquiring unit 113 with reference to the information stored in the charging stand information storage unit 123. Then, the allowable power setting unit 114 stores information indicating the value of the set allowable power as the allowable power of the specified charging stand S in the allowable power information storage unit 126. In this way, the allowable power information storage unit 126 of the system managing device 110 stores the information illustrated in FIG. 7.

FIG. 14 illustrates an example of an operation sequence in the system managing device 110 and the charging stand managing device 130. This operation sequence represents an operation flow of guiding a consumer on a charger C which can be utilized at a predetermined time and the output power thereof. This operation sequence will be described below with reference to FIGS. 1 to 13.

The charger specifying unit 115 of the system managing device 110 specifies a charger C which can be utilized at a predetermined time from the chargers C which are not determined to be utilized at the predetermined time on the basis of the allowable power set by the allowable power setting unit 114, the total sum of the output power of the chargers C determined to be utilized at the predetermined time, and the output power of the chargers C which are not determined to be utilized at the predetermined time (S301). More specifically, the charger specifying unit 115 specifies a charger C which can be utilized at a predetermined time when the information stored in the allowable power information storage unit 126 or the reservation information storage unit 127 is updated. For example, when the information stored in the allowable power information storage unit 126 or the reservation information storage unit 127 is updated, the charger specifying unit 115 specifies charger C which can be utilized at the predetermined time in the target charging infrastructure corresponding to the updated information. For example, when it is assumed that the information of the allowable power stored in correlation with the time zone of "04:00" to "05:00" and the charging stand of "charging stand Sa" from the information stored in the allowable power information storage unit 126 is updated to "100 (kW)", the charger specifying unit 115 reads target information reserved for the time zone of 04:00 to 05:00 as information stored in correlation with the charging stand of "charging stand Sa" from the information stored in the reservation information storage unit 127. For example, it is assumed that the information illustrated in FIG. 8 is stored in the reservation information storage unit 127. In this case, the charger specifying unit 115 reads information stored in correlation with the member IDs "M0001 ", "M0415", and "M0928". In this case, the charger Caa with output power of 50 (kW) and the charger Cca with output power of 30 (kW) are reserved for the time zone of 04:15 to 04:30. Therefore, the total sum of the output power of the chargers C determined to be utilized in the time zone of 04:15 to 04:30 is 50 (kW)+30 (kW)=80 (kW). The chargers C which are not determined to be utilized in the time zone of 04:15 to 04:30 include only the charger Cba. Therefore, the charger specifying unit 115 specifies 100 (kW)-80 (kW) = 20 (kW) as the output power of the charger C which can be utilized in the time zone of 04:15 to 04:30. Here, the charger Cba can output power of 20 (kW). Therefore, the charger specifying unit 115 specifies the charger Cba with output power of 20 (kW) as the charger C which can be utilized in the time zone of 04:15 to 04:30. The charger specifying unit 115 sends the data indicating the specified charger C and the output power thereof to the charger guidance unit 116 and the charger data transmitting unit 117.

When the data sent from the charger specifying unit 115 is received, the charger guidance unit 116 of the system managing device 110 guides a consumer on the charger C and the output power indicated by the received data as the information of the charger C which can be utilized at the predetermined time (S302). For example, the charger guidance unit 116 discloses a web page indicating the information of the charger C, which can be utilized at the predetermined time, over the Internet. A consumer pursues the web page through the use of a web browser of a consumer terminal T. In this way, the display screen 200 illustrated in FIG. 10 is displayed on the web browser of the consumer terminal T.

On the other hand, when the data sent from the charger specifying unit 115 is received, the charger data transmitting unit 117 of the system managing device 110 transmits the data received from the charger specifying unit 115 to the charging stand managing device 130 of the charging stand S provided with the charger C indicated by the received data (S303). When the data transmitted from the system managing device 110 is received, the charger data receiving unit 131 of the charging stand managing device 130 sends the received data to the charger guidance unit 132.

When the data sent from the charger data receiving unit 131 is received, the charger guidance unit 132 of the charging stand managing device 130 guides a consumer on the charger C and the output power indicated by the received data as the information of the charger C which can be utilized at the predetermined time (S304). For example, the charger guidance unit 132 outputs display data for displaying the information of the charger C which can be utilized at the predetermined time on the touch screen D. In this way, the display screen 200 illustrated in FIG. 10 is displayed on the touch screen D.

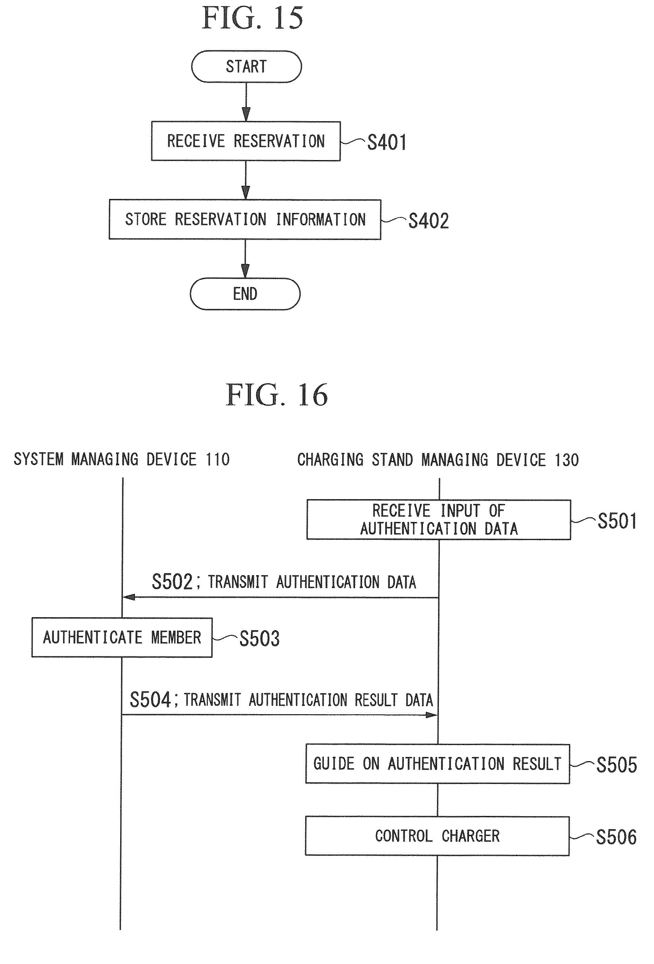

FIG. 15 illustrates another example of the operation flow in the system managing device 110. This operation flow represents an operation flow of receiving a reservation to utilize the charger C from a consumer terminal T. This operation flow will be described below with reference to FIGS. 1 to 14.

When a consumer wants to reserve utilization of a charger C, the consumer accesses the web page disclosed over the Internet by the system managing device 110 by the use of a web of a consumer terminal T. In this way, the display screen 200 illustrated in FIG. 10 is displayed on the web browser of the consumer terminal T. Then, the consumer reserves the utilization of a desired charger C in the web page.

When the reservation from the consumer is received (S401), the reservation receiving unit 118 of the system managing device 110 stores the information on the reserved charger C in the reservation information storage unit 127 (S402). In this way, the information illustrated in FIG. 8 is stored in the reservation information storage unit 127 of the system managing device 110.

FIG. 16 illustrates another example of the operation sequence in the system managing device 110 and the charging stand managing device 130. This operation sequence represents an operation sequence when a consumer reserved utilization of a charger C starts utilization of the charger C. This operation sequence will be described below with reference to FIGS. 1 to 15.

A consumer brings an IC card into contact with the IC card reader disposed in a charging stand S to perform member authentication in using a charger C of the charging stand S. When it is brought into contact with the IC card, the IC card reader R reads data used to authenticate the consumer as a member from the IC card. For example, a member ID is recorded as data used to authenticate the consumer as a member on the IC card. The IC card reader R outputs the read data to the charging stand managing device 130.

When the input of data used to authenticate the consumer as a member is received from the IC card reader R (S501), the authentication data input receiving unit 133 of the charging stand managing device 130 sends the data to the authentication data transmitting unit 134 and the request data transmitting unit 136.

When the data sent from the authentication data input receiving unit 133 is received, the authentication data transmitting unit 134 of the charging stand managing device 130 transmits the received data to the system managing device 110 (S502). When the data transmitted from the charging stand managing device 130 is received, the authentication data receiving unit 120 of the system managing device 110 sends the received data to the member authenticating unit 121.

The request data transmitting unit 136 of the charging stand managing device 130 receives the data sent from the authentication data input receiving unit 133, but does not perform any operation in this operation sequence because data is not sent from the utilization request receiving unit 135.

When the data sent from the authentication data receiving unit 120 is received, the member authenticating unit 121 of the system managing device 110 authenticates whether the consumer is registered as a member (S503). For example, the member authenticating unit 121 authenticates whether the consumer is registered as a member by determining whether the member ID indicated by the data received from the authentication data receiving unit 120 is valid with reference to the information stored in the member information storage unit 124. When the consumer is registered as a member, the member authenticating unit 121 specifies a charger C which will be utilized by the authenticated consumer and the output power thereof with reference to the reservation information storage unit 127. Then, the member authenticating unit 121 sends the data indicating the specified charger C and the specified output power thereof to the authentication result data transmitting unit 122.

When the data sent from the member authenticating unit 121 is received, the authentication result data transmitting unit 122 of the system managing device 110 transmits the received data to the charging stand managing device 130 (S504). When the data transmitted from the system managing device 110 is received, the authentication result data receiving unit 137 of the charging stand managing device 130 sends the received data to the authentication result guidance unit 138 and the charger control unit 139.

When the data sent from the authentication result data receiving unit 137 is received, the authentication result guidance unit 138 of the charging stand managing device 130 guides the authenticated consumer on the charger C indicated by the received data as the charger C which will be utilized by the authenticated consumer (S505). For example, the authentication result guidance unit 138 outputs display data used to display guidance on the charger C, which will be utilized by the authenticated consumer, on the touch screen D. In this way, the display screen 300 illustrated in FIG. 11 is displayed on the touch screen D. In this way, the consumer can find the charger C to be utilized by oneself.

On the other hand, when the data sent from the authentication result data receiving unit 137 is received, the charger control unit 139 of the charging stand managing device 130 controls the charger C which will be utilized by the authenticated consumer so as to be utilized with the output power selected by the authenticated consumer with the charger C and the output power indicated by the received data as the charger C which will be utilized by the authenticated consumer and the output power thereof (S506). In this way, the consumer can utilize the self-reserved charger C.

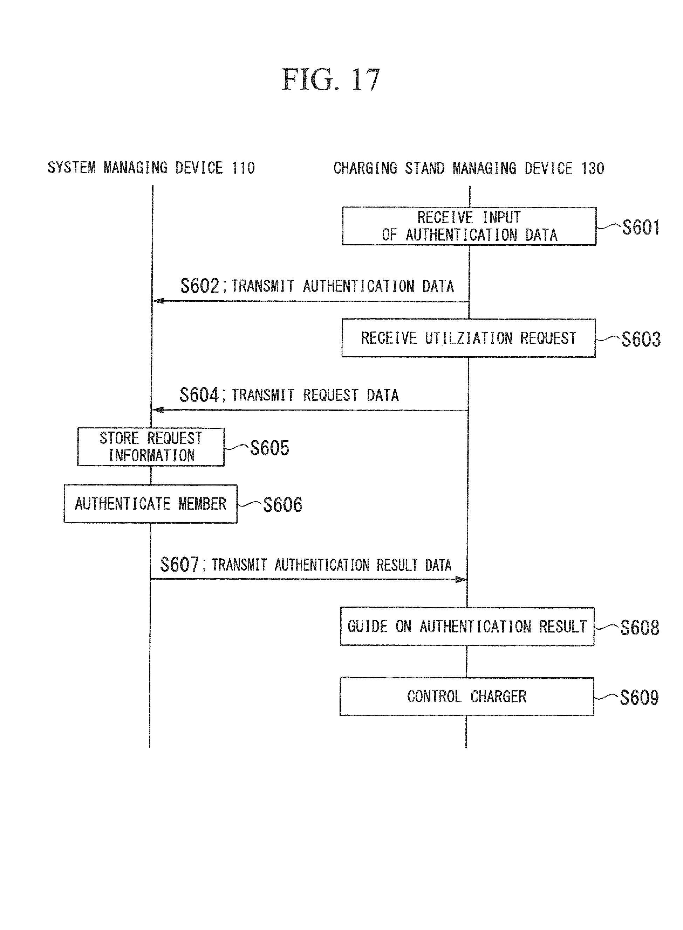

FIG. 17 illustrates still another example of the operation sequence in the system managing device 110 and the charging stand managing device 130. This operation sequence represents an operation sequence when a consumer not reserving utilization of a charger C starts utilization of the charger C after requesting utilization of the charger C. This operation sequence will be described below with reference to FIGS. 1 to 16.

In utilizing a charger C in a charging stand S, the consumer brings an IC card into contact with an IC card reader R disposed in the charging stand S to perform member authentication. When the IC card comes into contact with the IC card reader, the IC card reader R reads data used to authenticate the consumer as a member from the IC card. For example, a member ID is recorded on the IC card as the data used to authenticate the consumer as a member. The IC card reader R outputs the read data to the charging stand managing device 130.

Here, the processes of steps S601 and S602 in this operation sequence are the same as the processes of steps S501 and S502 in the operation sequence described above with reference to FIG. 16 and thus a detailed description thereof will not be repeated here.

The display screen 200, which is illustrated in FIG. 10, used to display information of chargers C capable of being utilized at a predetermined time and output power thereof is displayed on the touch screen D of the charging stand S. The consumer operates the touch screen D while checking the information displayed on the touch screen D to request utilization of a desired charger C.

When the utilization request from the consumer is received (S603), the utilization request receiving unit 135 of the charging stand managing device 130 sends data indicating the information on the requested charger C to the request data transmitting unit 136.

When the data sent from the authentication data input receiving unit 133 and the data sent from the utilization request receiving unit 135 are received, the request data transmitting unit 136 of the charging stand managing device 130 transmits data, which includes information indicated by the received data, indicating details of the utilization request for the charger C to the system managing device 110 (S604). When the data transmitted from the charging stand managing device 130 is received, the request data receiving unit 119 of the system managing device 110 stores information indicated by the received data in the reservation information storage unit 127 (S605). In this way, the information illustrated in FIG. 8 is stored in the reservation information storage unit 127 of the system managing device 110.

Here, the processes of steps S606 to S609 in this operation sequence are the same as the processes of steps S503 to S506 in the operation sequence described above with reference to FIG. 16 and thus the detailed description thereof will not be repeated here. In this way, the consumer can utilize the charger C reserved by oneself.

As described above, the charging stand management system 100 is particularly useful for a situation with insufficient power in which power consumption is more limited compared with regular circumstances.

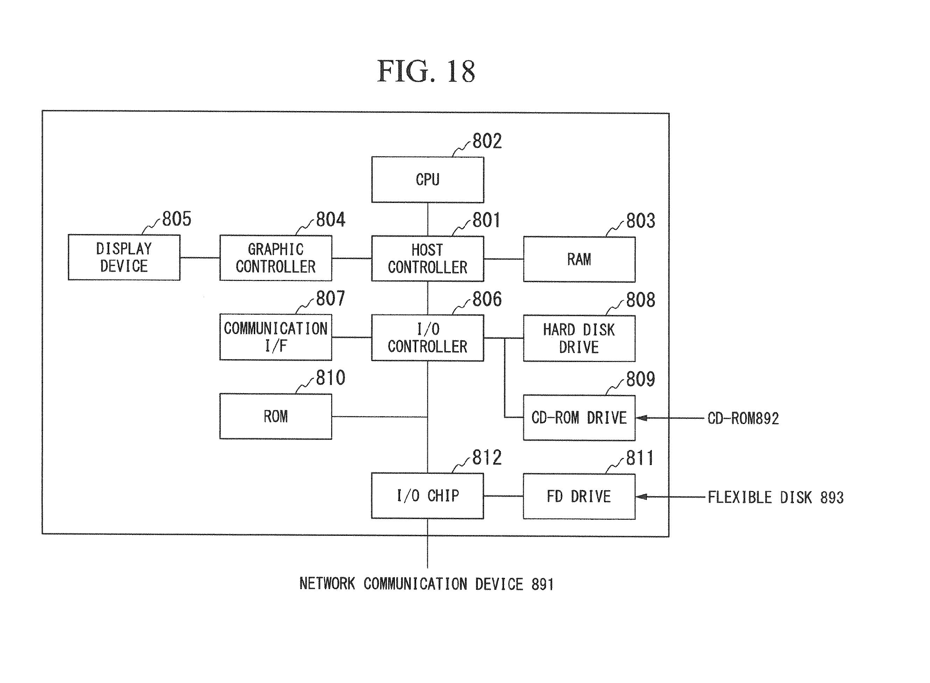

FIG. 18 illustrates an example of a hardware configuration when the system managing device 110 and the charging stand managing device 130 are embodied by an electronic information processing device such as a computer. The system managing device 110 and the charging stand managing device 130 includes a CPU (Central Processing Unit) and peripheral unit, an input and output unit, and a legacy input and output unit. The CPU and peripheral unit includes a CPU 802, a RAM (Random Access Memory) 803, a graphic controller 804, and a display device 805 which are connected to each other via a host controller 801. The input and output unit includes a communication interface 807 connected to the host controller 801 via an input and output controller 806, a hard disk drive 808, and a CD-ROM (Compact Disk Read Only Memory) drive 809. The legacy input and output unit includes a ROM (Read Only Memory) 810, a flexible disk drive 811, and an input and output chip 812 connected to the input and output controller 806.

The host controller 801 connects the RAM 803, the CPU 802 accessing the RAM 803 at a high transmission rate, and the graphic controller 804 to each other. The CPU 802 operates in accordance with programs stored in the ROM 810 and the RAM 803 to control the respective constituent units. The graphic controller 804 acquires image data generated on a frame buffer disposed in the RAM 803 by the CPU 802 or the like and displays the acquired image data on the display device 805. Instead, the graphic controller 804 may have a frame buffer, which stores the image data generated by the CPU 802 or the like, therein.

The input and output controller 806 connects the host controller 801 to the hard disk drive 808 which is a relatively high-speed input and output device, the communication interface 807, and the CD-ROM drive 809. The hard disk drive 808 stores programs and data to be used by the CPU 802. The communication interface 807 accesses a network communication device 891 and transmits and receives the programs or data thereto and therefrom. The CD-ROM drive 809 reads the programs or data from a CD-ROM 892 and provides the read programs or data to the hard disk drive 808 and the communication interface 807 via the RAM 803.

The input and output controller 806 is connected to the ROM 810, the flexible disk drive 811, and a relatively low-speed input and output device of the input and output chip 812. The ROM 810 stores booting programs which are executed at the time of startup of the system managing device 110 and the charging stand managing device 130, programs depending on hardware of the system managing device 110 and the charging stand managing device 130, and the like. The flexible disk drive 811 reads programs or data from a flexible disk 893 and provides the read programs or data to the hard disk drive 808 and the communication interface 807 via the RAM 803. The input and output chip 812 connects various input and output devices via a flexible disk drive 811, a parallel port, a serial port, a keyboard port, a mouse port, and the like.

The programs executed by the CPU 802 are recorded on a recording medium such as a flexible disk 893, a CD-ROM 892, or an IC (Integrated Circuit) card and are provided by a user. The programs stored in the recording medium may be compressed or non-compressed. The programs are installed in the hard disk drive 808 from the recording medium, are read to the RAM 803, and are executed by the CPU 802. The programs executed by the CPU 802 cause the system managing device 110 to serve as the utilization fee data acquiring unit 111, the utilization fee setting unit 112, the prediction data acquiring unit 113, the allowable power setting unit 114, the charger specifying unit 115, the charger guidance unit 116, the guidance data transmitting unit 117, the reservation receiving unit 118, the request data receiving unit 119, the authentication data receiving unit 120, the member authenticating unit 121, the authentication result data transmitting unit 122, the charging stand information storage unit 123, the member information storage unit 124, the utilization fee information storage unit 125, the allowable power information storage unit 126, and the reservation information storage unit 127, which are described with reference to FIGS. 1 to 17, and cause the charging stand managing device 130 to serve as the charger data receiving unit 131, the charger guidance unit 132, the authentication data input receiving unit 133, the authentication data transmitting unit 134, the utilization request receiving unit 135, the request data transmitting unit 136, the authentication result data receiving unit 137, the authentication result guidance unit 138, and the charger control unit 139, which are described with reference to FIGS. 1 to 17.

The above-mentioned programs may be stored in an external storage medium. In addition to the flexible disk 893 and the CD-ROM 892, an optical recording medium such as a DVD (Digital Versatile Disk) or a PD (Phase Disk), a magneto-optical recording medium such as an MD (Mini Disk), a tape medium, a semiconductor memory such as an IC card, and the like can be used as the storage medium. The program according to the present invention may be provided via a network using a storage medium such as a hard disk or a RAM installed in a server system connected to an exclusive communication network or the Internet as a recording medium.

While the present invention is described in conjunction with the embodiments, the technical scope of the present invention is not limited to the scope described in the embodiments. It will be apparently understood by those skilled in the art that the embodiments can be changed or modified in various forms. It can be apparently seen from the description of the appended claims that such changes or modifications belong to the technical scope of the present invention.

### Industrial Applicability

The charging stand management system according to the present invention is a charging stand management system that manages a charging stand provided with one or more chargers, including: a charger specifying unit that specifies the charger which can be utilized at a predetermined time from the chargers which are not determined to be utilized at the predetermined time on the basis of allowable power at the predetermined time, the total sum of output power of the chargers determined to be utilized at the predetermined time, and the output power of the chargers which are not determined to be utilized at the predetermined time when the allowable power capable of being utilized in the charging stand varies; and a charger guidance unit that guides a consumer on the charger, which can be utilized at the predetermined time and specified by the charger specifying unit, and the output power thereof.

The charging stand management system according to the present invention is particularly useful for a case under a situation with insufficient power in which power consumption is limited due to insufficient power compared with regular circumstances.

### Reference Signs List

- 100:: CHARGING STAND MANAGEMENT SYSTEM
- 110:: SYSTEM MANAGING DEVICE
- 111:: UTILIZATION FEE DATA ACQUIRING UNIT
- 112:: UTILIZATION FEE SETTING UNIT
- 113:: PREDICTION DATA ACQUIRING UNIT
- 114:: ALLOWABLE POWER SETTING UNIT
- 115:: CHARGER SPECIFYING UNIT
- 116:: CHARGER GUIDANCE UNIT
- 117:: CHARGER DATA TRANSMITTING UNIT
- 118:: RESERVATION RECEIVING UNIT
- 119:: REQUEST DATA RECEIVING UNIT
- 120:: AUTHENTICATION DATA RECEIVING UNIT
- 121:: MEMBER AUTHENTICATING UNIT
- 122:: AUTHENTICATION RESULT DATA TRANSMITTING UNIT
- 123:: CHARGING STAND INFORMATION STORAGE UNIT
- 124:: MEMBER INFORMATION STORAGE UNIT
- 125:: UTILIZATION FEE INFORMATION STORAGE UNIT
- 126:: ALLOWABLE POWER INFORMATION STORAGE UNIT
- 127:: RESERVATION INFORMATION STORAGE UNIT
- 130:: CHARGING STAND MANAGING DEVICE
- 131:: CHARGER DATA RECEIVING UNIT
- 132:: CHARGER GUIDANCE UNIT
- 133:: AUTHENTICATION DATA INPUT RECEIVING UNIT
- 134:: AUTHENTICATION DATA TRANSMITTING UNIT
- 135:: UTILIZATION REQUEST RECEIVING UNIT
- 136:: REQUEST DATA TRANSMITTING UNIT
- 137:: AUTHENTICATION RESULT DATA RECEIVING UNIT
- 138:: AUTHENTICATION RESULT GUIDANCE UNIT
- 139:: CHARGER CONTROL UNIT
- 200:: DISPLAY SCREEN
- 300:: DISPLAY SCREEN
- 801:: HOST CONTROLLER
- 802:: CPU
- 803:: RAM
- 804:: GRAPHIC CONTROLLER
- 805:: DISPLAY DEVICE
- 806:: INPUT AND OUTPUT CONTROLLER
- 807:: COMMUNICATION INTERFACE
- 808:: HARD DISK DRIVE
- 809:: CD-ROM DRIVE
- 810:: ROM
- 811:: FLEXIBLE DISK DRIVE
- 812:: INPUT AND OUTPUT CHIP
- 891:: NETWORK COMMUNICATION DEVICE
- 892:: CD-ROM
- 893:: FLEXIBLE DISK
- C:: CHARGER
- D:: TOUCH SCREEN
- N:: COMMUNICATION LINE
- R:: IC CARD READER
- S:: CHARGING STAND
- T:: CONSUMER TERMINAL

## Claims

1. A charging stand management system that manages a charging stand provided with one or more chargers, the system comprising:
a charger specifying unit that, where allowable power capable of being utilized in the charging stand varies, specifies the charger which is utilized at a predetermined time from among the chargers which are not determined to be utilized at the predetermined time, the charger being specified on the basis of the allowable power at the predetermined time, the total sum of output power of the chargers determined to be utilized at the predetermined time, and the output power of the chargers which are not determined to be utilized at the predetermined time; and
a charger guidance unit that guides a consumer on the charger which is specified by the charger specifying unit to be utilized at the predetermined time, and the output power of the specified charger.

2. The charging stand management system according to claim 1, further comprising an allowable power setting unit that sets the allowable power of a charging stand disposed in a predetermined region on the basis of power supply-demand prediction in the predetermined region,
wherein the charger specifying unit specifies the charger which is utilized at a predetermined time from the chargers which are not determined to be utilized at the predetermined time on the basis of the allowable power set by the allowable power setting unit, the total sum of output power of the chargers determined to be utilized at the predetermined time, and the output power of the chargers which are not determined to be utilized at the predetermined time.

3. The charging stand management system according to claim 1 or 2, further comprising a utilization fee setting unit that sets a utilization fee of a charger,
wherein the charger guidance unit guides a consumer on the utilization fee of the charger set by the utilization fee setting unit along with the charger, which is utilized at the predetermined time and specified by the charger specifying unit, and the output power thereof.

4. A control method of controlling a charging stand management system that manages a charging stand provided with one or more chargers, the method comprising:
a charger specifying step of specifying the charger which is utilized at a predetermined time from the chargers which are not determined to be utilized at the predetermined time on the basis of allowable power at the predetermined time, the total sum of output power of the chargers determined to be utilized at the predetermined time, and the output power of the chargers which are not determined to be utilized at the predetermined time where the allowable power capable of being utilized in the charging stand varies; and
a charger guidance step of guiding a consumer on the charger, which is utilized at the predetermined time and specified in the charger specifying step, and the output power thereof.

5. A program for a charging stand management system that manages a charging stand provided with one or more chargers, the program making the charging stand management system serve as:
a charger specifying unit that specifies the charger which is utilized at a predetermined time from the chargers which are not determined to be utilized at the predetermined time on the basis of allowable power at the predetermined time, the total sum of output power of the chargers determined to be utilized at the predetermined time, and the output power of the chargers which are not determined to be utilized at the predetermined time where the allowable power capable of being utilized in the charging stand varies; and
a charger guidance unit that guides a consumer on the charger, which is utilized at the predetermined time and specified by the charger specifying unit, and the output power thereof.
